# EUROPÄISCHE PATENTSCHRIFT

(11) **EP 2 522 535 B1**
(45) Veröffentlichungstag und Bekanntmachung des Hinweises auf die Patenterteilung: **10.02.2016**
(21) Anmeldenummer: 12167306.5
(22) Anmeldetag: 09.05.2012
(51) Int. Cl.: B60J 1/20

(54) **Rollosystem**
Roller blind system
Système de store

(30) Priorität: 13.05.2011 DE 102011075843
(43) Veröffentlichungstag der Anmeldung: 14.11.2012
(73) Patentinhaber: BOS GmbH & Co. KG, 73760 Ostfildern (DE)
(72) Erfinder: Weinbrenner, Harry, 72644 Oberboihingen (DE)
(74) Vertreter: Patentanwälte Ruff, Wilhelm, Beier, Dauster & Partner mbB

(56) Entgegenhaltungen:
- EP-A1- 2 465 716
- EP-A2- 1 736 335
- DE-U1-202007 018 180
- US-A- 6 086 133

## Beschreibung

Die Erfindung betrifft ein Rollosystem für ein Kraftfahrzeug, insbesondere zur Beschattung eines Heckfensters des Kraftfahrzeugs.

Dabei verfügt ein gattungsgemäßes Rollosystem über ein insbesondere zur Abdeckung des Fensters vorgesehenes flexibles Flächengebilde, welches zwischen einem Stauzustand und einem Funktionszustand beweglich ist. Es verfügt weiterhin über ein an einem distalen Ende des Flächengebildes vorgesehenes Auszugprofil sowie über zwei Führungsschienen, die beidseitig des Flächengebildes in dessen Funktionszustand angeordnet sind und die sich zumindest abschnittsweise nichtparallel erstrecken. Dabei ist das Auszugprofil zur geführten Bewegung entlang der Führungsschienen mit zwei einander gegenüberliegenden endseitigen Gleitabschnitten versehen, die sich im Eingriff mit jeweils einer Führungsschiene befinden, so dass das Auszugprofil zur Überführung des Flächengebildes in seinen Funktionszustand in geführter Weise entlang der Führungsschienen bewegt werden kann. Weiterhin weist das Auszugprofil eine im Stauzustand in Auszugsrichtung weisende Abdeckfläche auf, die der Abdeckung eines Austrittsschlitzes für das Flächengebilde dient.

Das Auszugprofil ist längenveränderlich ausgebildet und weist hierfür ein mit dem distalen Ende des Flächengebildes verbundenes Hauptsegment und zwei gegenüber dem Hauptsegment orthogonal zur Auszugsrichtung mittels einer Führung geführte bewegliche Endsegmente auf. Die genannte Abdeckfläche wird durch einen Hauptabschnitt am Hauptsegment und durch Seitenabschnitte an den Endsegmenten gemeinsam gebildet.

Gattungsgemäße Rollosysteme sind aus dem Stand der Technik bekannt. Sie finden insbesondere in Fahrzeugen insbesondere im Bereich der Heckscheibe Verwendung, um hier eine Beschattungswirkung zu entfalten. Aufgrund der üblicherweise etwa trapezförmigen Formgebung der Heckscheiben sind die Führungsschienen, entlang derer das Auszugprofil bewegt werden kann, in Auszugrichtung zumeist aufeinanderzulaufend ausgebildet. Der Abstand der im Eingriff mit den Führungsschienen befindlichen Gleitabschnitte muss sich daher während der Bewegung des Auszugprofils entlang der Führungsschienen verringern. Zu diesem Zweck ist das Auszugprofil in der genannten Weise aus mindestens drei Teilabschnitten aufgebaut. Zwei Endsegmente, an denen die Gleitabschnitte vorgesehen sind, sind gegenüber einem mittigen Hauptsegment quer zur Auszugrichtung beweglich, so dass die Gesamtlänge des Auszugprofils in Abhängigkeit seiner Lage in den Führungsschienen variabel ist.

Ein derartiges gattungsgemäßes Rollosystem ist beispielsweise aus der EP 1736335 A2 bekannt. Die Rollowelle des Rollosystems ist dabei unterhalb einer Hutablage vorgesehen, wobei diese Hutablage von einem Austrittsschlitz durchbrochen ist, durch den das Flächengebilde in den Fahrzeuginnenraum geführt ist. Die in Richtung des Fahrzeuginnenraums weisenden Abdeckflächen am Auszugsprofil dienen dem Zweck, diesen Austrittsschlitz im Stauzustand des Rollosystems aus ästhetischen Bewegungen so zu überdecken, dass er aus dem Fahrzeuginnenraum bzw. von außen durch die Heckscheibe hindurch nicht mehr erkennbar ist.

Bei dem in der genannten EP 17 36 335 A2 beschriebenen System weisen die Endsegmente, die die Seitenabschnitte der Abdeckfläche bilden, einen gegenüber dem Hauptsegment größeren Querschnitt auf. Sie werden somit im verkürzten Zustand des Auszugprofils, welcher sich üblicherweise im Funktionszustand einstellt, auf das Hauptsegment aufgeschoben. Die gewünschte Abdeckwirkung im Stauzustand des Rollosystems wird mit diesen aufgeschobenen Endsegmenten in befriedigender Weise erreicht. Nachteile ergeben sich jedoch insbesondere im Hinblick auf den Funktionszustand. So wird im Funktionszustand, in dem das Auszugprofil im Bereich des Dachhimmels angeordnet ist, durch den im Bereich des Hauptsegments geringerem Querschnitt selbst bei einem vollständig ebenen Dachhimmel ein Lichtspalt verursacht, der als nachteilig angesehen wird. Bei einem gewölbten Dachhimmel verschärft sich diese Problematik. Zwar kann bei einem gewölbten Dachhimmel vorgesehen sein, dass das Hauptsegment in seiner Haupterstreckungsrichtung eine ebenfalls gewölbte Seitenkante aufweist. Allerdings kann sich diese Wölbung bei der bekannten Gestaltung eines gattungsgemäßen Rollosystems nicht bis zu den gegenüberliegenden Enden des Hauptsegments erstrecken, da diese in diesen Endbereichen zum Zwecke des Aufschiebens der Endsegmente einen in etwa gleichbleibenden Querschnitt aufweisen müssen.

Die US 6 086 133 A beschreibt ein Rollosystem gemäß dem Oberbegriff des Anspruchs 1.

### Aufgabe und Lösung

Aufgabe der Erfindung ist es, ein gattungsgemäßes Rollosystem dahingehend weiterzubilden, dass dieses sowohl im Stauzustand als auch im Funktionszustand ästhetisch und funktional gegenüber dem bekannten Stand der Technik vorteilhaft ist. Die Aufgabe wird mit den Merkmalen des Anspruchs 1 gelöst.

Es ist vorgesehen, dass die Seitenabschnitte der Abdeckfläche bei einer Längenverringerung des Auszugprofils in einem vom Hauptsegment umgebenen Aufnahmeraum einfahren.

Es ist somit vorgesehen, dass die Endsegmente oder zumindest die durch diese gebildete Abdeckflächen bei einer Längenverringerung des Auszugprofils nicht auf das Hauptsegment aufgeschoben werden, sondern in das Hauptsegment eingeschoben werden.

Die von einem Hauptabschnitt am Hauptsegment und den Seitenabschnitten an den Endsegmenten gemeinsam gebildete Abdeckfläche verändert somit bei einer Längenveränderung des Auszugprofils ihre Fläche dadurch, dass der sichtbare Teil der Seitenabschnitte verringert wird, da diese in das Hauptsegment einfahren. Der durch das Hauptsegment gebildete Hauptabschnitt der Abdeckfläche bleibt dagegen stets unverändert vollständig sichtbar.

Somit wird erreicht, dass die Mehrteiligkeit des Auszugprofils hinsichtlich des Hauptsegmentes und der Endsegmente nicht im Stauzustand und im Funktionszustand gleichermaßen offensichtlich ist, da üblicherweise im Funktionszustand eintretenden Falle eines verkürzten Auszugprofils die Endsegmente teilweise und vorzugsweise annähernd vollständig in das Hauptsegment eingefahren sind und somit kaum zu sehen sind. Die Länge der Endsegmente ist relativ zur Länge des Hauptsegments gering. Vorzugsweise machen die Endsegmente jeweils weniger als 20%, insbesondere vorzugsweise weniger als 10% der Gesamtlänge des Auszugprofils aus, wobei sich diese Angaben auf den bei maximaler Längenerstreckung des Auszugprofils sichtbaren Teil der Abdeckfläche bezieht.

Im Stauzustand liegt das Auszugprofil in einem gegenüber seiner geringsten Längenerstreckung verlängerten Zustand vor. In diesem Zustand sind die Endsegmente zumindest teilweise aus dem Hauptabschnitt herausgezogen, so dass die sichtbare Abdeckfläche durch den Hauptabschnitt am Hauptsegment und die aus dem Hauptsegment herausgezogenen Seitenabschnitte am Endsegment gemeinsam gebildet wird.

Die Abdeckfläche dient dabei primär dem Zweck, in diesem Stauzustand den Austrittsschlitz, durch den das Flächengebilde in den Fahrzeuginnenraum gelangt, vollständig oder nahezu vollständig zu kaschieren, da dieser als ästhetisch besonders nachteilig angesehen wird. Das Abdecken des Auszugschlitzes dient darüber hinaus der Schallisolierung des Fahrzeuginnenraums gegenüber einem Kofferraumbereich des Fahrzeugs. Die Abdeckfläche weist sowohl im Bereich ihres Hauptabschnitts als auch im Bereich ihrer Seitenabschnitte eine mittlere Breite quer zu ihrer Haupterstreckungsrichtung von vorzugsweise mindestens 2cm, insbesondere vorzugsweise mindestens 3cm auf. Diese Breite gewährleistet zuverlässig die Abdeckung des üblicherweise nur wenige Millimeter breiten Austrittsschlitzes. Die Abdeckfläche muss den Austrittsschlitz nicht unmittelbar abdecken. Sie kann auch eine Vertiefung abdecken, an deren Grund der Austrittsschlitz vorgesehen ist. Es wird also vorteilhaft angesehen, wenn die Abdeckung derart an den Schlitz angepasst ist, dass ein Durchtritt nicht möglich ist.

Die Seitenabschnitte der Abdeckfläche und der Hauptabschnitt der Abdeckfläche sind aufgrund der Tatsache, dass die Seitensegmente bestimmungsgemäß in das Hauptsegment einfahren, zwingend nicht exakt fluchtend zueinander angeordnet. Die Seitenabschnitte und der Hauptabschnitt der Abdeckfläche sind jedoch zumindest im Wesentlichen parallel zueinander ausgebildet, wobei hierunter verstanden wird, dass Normalenvektoren auf den Seitenabschnitten einerseits und auf dem Hauptabschnitt andererseits um nicht mehr als 10° voneinander divergieren.

Das bei einem erfindungsgemäßen Rollosystem vorgesehene Flächengebilde ist vorzugsweise im Stauzustand auf einer Wickelwelle aufgewickelt und von dieser durch Ziehen am Auszugprofil abwickelbar. Grundsätzlich sind jedoch auch andere Gestaltungen des Flächengebildes im Stauzustand denkbar, so zum Beispiel eine leporelloartige Faltung des Flächengebildes.

Grundsätzlich ist denkbar, dass das Einfahren der Seitenabschnitte der Abdeckfläche oder sogar der gesamten Endsegmente in das Hauptsegment in einen zur Unterseite des Auszugprofils hin offenen Aufnahmeraum erfolgt, da das Umgeben des Aufnahmeraums durch das Hauptsegment im Sinne der Erfindung auch gegeben ist, wenn der Aufnahmeraum nur nach oben durch das Hauptsegment umgeben ist. Vorteilhaft ist es jedoch, wenn der Querschnitt des Hauptsegments im Bereich des Aufnahmeraums umfänglich geschlossen ist, so dass der in das Hauptsegment eingetauchte Abschnitt des jeweiligen Endsegments vollständig vom Hauptsegment umgeben ist. Hierdurch lässt sich die Mehrteiligkeit des Auszugprofils besonders gut kaschieren. In einem Zustand, in dem das Auszugprofil seine geringste Erstreckung in Längsrichtung aufweist, können die Endsegmente vollständig oder nahezu vollständig vor Blicken geschützt sein. Auch führt ein solcher geschlossener Querschnitt zu einer erhöhten Stabilität des Auszugprofils.

Die Führung der Endsegmente am Hauptsegment erfolgt vorzugsweise durch Gleitführungen, wie sie auch schon bei der Gestaltung gemäß der EP 1 736 335 A2 Verwendung finden. Es sind somit an den Endsegmenten und dem Hauptsegment aneinander abgleitende Führungsflächen vorgesehen, die die lineare Relativbeweglichkeit zwischen Endsegmenten und Hauptsegment gewährleisten. Es ist dabei erfindungsgemäß von Vorteil, dass diese Führungen getrennt von den Seitenabschnitten der Abdeckfläche ausgebildet sind, so dass die Seitenabschnitte der Abdeckfläche beim Einfahren in den Aufnahmeraum nicht in Berührkontakt mit dem Hauptsegment gelangen. Es ist demnach vorteilhaft, wenn die seiteabschnittsseitige Abdeckfläche selbst nicht an der Führung der Seitenabschnitte ist. Stattdessen ist vorzugsweise eine in gleiche Richtung wie die Abdeckfläche, also insbesondere nach oben, weisende Führungsfläche vorgesehen, die die Beweglichkeit der seiteabschnittsseitige Abdeckfläche derart beschränkt, dass diese in gewünschter Weise nicht in Berührkontakt mit dem Hauptsegment gelangt. Die an den Endsegmenten vorgesehen Seitenabschnitte der Abdeckfläche nehmen somit nicht selbst an der Führung der Endsegmente gegenüber dem Hauptsegment teil. Zwar geht dies mit dem Erfordernis einher, eine anderweitige in Auszugrichtung weisende Fläche an den Endsegmenten vorzusehen, die als Führungsfläche dient. Allerdings wird hierdurch verhindert, dass das Einfahren oder Ausfahren der Endsegmente gegenüber dem Hauptsegment zu ästhetisch nachteiligen Schleifspuren an den Seitenabschnitten der Abdeckfläche führt. Der Abstand zwischen den Seitenabschnitten und einer nach innen auf die Seitenabschnitte zu weisenden Wandung des Aufnahmeraums des Hauptsegments beträgt vorzugsweise mindestens 0,3mm, insbesondere vorzugsweise mindestens 0,6mm, um zuverlässig zu gewährleisten, dass es auch bei Erschütterungen nicht zu dem ungewünschten Berührkontakt zwischen Seitenabschnitten und Hauptsegment kommt.

Insbesondere von Vorteil ist es, wenn das Hauptsegment eine sich von der Mitte zu den Seiten hin verjüngende Formgebung aufweist. Diese sich verjüngende Formgebung ist entlang einer Längskante des Hauptsegments vorgesehen, die im Falle eines Heckscheibenrollos sich in etwa in Fahrzeugquerrichtung erstreckt. Eine gegenüberliegende Längskante ist vorzugsweise im Wesentlichen geradlinig ausgebildet. Die gewölbte Längskante ist geeignet, im Funktionszustand des Flächengebildes, in dem das Auszugprofil etwa im Bereich des Dachhimmels angeordnet ist, ein weitgehend bündiges Heranbewegen des Auszugprofils bis an den Dachhimmel zu gestatten, um hier das Eintreten von Licht in den Fahrzeuginnerraum möglichst weitgehend zu verhindern. Eine derartig gewölbte Formgebung ist aus dem Stand der Technik an sich bekannt. Allerdings kann sie aufgrund des erfindungsgemäßen Einfahrens der Endsegmente in das Hauptsegment sich bis zu den äußeren Kanten des Hauptsegments erstrecken und somit in dem Funktionszustand des Flächengebildes sich über die annähernd vollständige Länge des Auszugprofils erstrecken. Insbesondere bei Verwendung eines solchen sich zu den Seiten hin verjüngenden Hauptsegments ist das erfindungsgemäß vorgesehene Einfahren der Endsegmente von erheblichem Vorteil.

Das Rollosystem umfasst vorzugsweise auch eine Abdeckplatte, in der der bereits genannte Austrittsschlitz vorgesehen ist, durch den hindurch das Flächengebilde bei der Überführung aus dem Stauzustand in den Funktionszustand hindurchgezogen wird. Dieser Austrittsschlitz weist dabei eine Länge auf, die die Länge des Hauptsegments übersteigt, die jedoch durch das Auszugprofil bei ausgezogenen Endsegmenten von der Abdeckfläche vollständig oder nahezu vollständig überdeckt werden kann. Die gegebenenfalls nicht überdeckten Enden des Austrittsschlitzes haben vorzugsweise eine Länge von weniger als 15mm.

Bei der genannten Abdeckplatte handelt es sich vorzugsweise um eine Hutablage, die hinter den hinteren Sitzen eines Fahrzeugs angeordnet ist und die in etwa horizontal ausgerichtet ist. Der Austrittsschlitz kann dabei am Grund einer Vertiefung angeordnet sein, in welcher das Auszugprofil in der Staulage des Flächengebildes angeordnet ist, so dass sich in dieser Staulage eine etwa ebene Fläche bildet, die zum Teil von der Abdeckplatte gebildet wird und zum Teil von der Abdeckfläche am Auszugprofil.

Vorzugsweise ist unterhalb dieser Abdeckplatte eine Wickelwelle angeordnet, auf der das Flächengebilde im Stauzustand aufgewickelt ist. Das Flächengebilde selbst ist dabei vorzugsweise trapezförmig, um hierdurch an die nichtparallele Erstreckung der Führungsschienen und die Formgebung der Heckscheibe angepasst zu sein.

Die Erfindung betrifft weiterhin auch ein Fahrzeug mit einem Rollosystem, insbesondere einem Beschattungs-Rollosystem zur Beschattung eines Heckfensters des Kraftfahrzeugs. Dabei ist das Rollosystem nach oben beschriebener Art ausgebildet.

### Kurzbeschreibung der Zeichnungen

Weitere Aspekte und Vorteile der Erfindung ergeben sich außer aus den Ansprüchen auch aus der nachfolgenden Beschreibung eines bevorzugten Ausführungsbeispiels der Erfindung, welches anhand der Figuren nachfolgend erläutert wird. Dabei zeigen:
- Fig. 1a und 1b: ein erfindungsgemäßes Rollosystem in einem Stauzustand und einem Funktionszustand,
- Fig. 2: einen Endbereich des Auszugprofils des Rollosystems der Fig. 1 in einer Draufsicht,
- Fig. 3: das Auszugprofil des Rollosystems der Fig. 1 in einer Gesamtansicht,
- Fig. 4: einen Endbereich des Auszugprofils in einer perspektivischen Darstellung und
- Fig. 5: einen Querschnitt durch das Auszugprofil des Rollosystems.

### Detaillierte Beschreibung des Ausführungsbeispiels

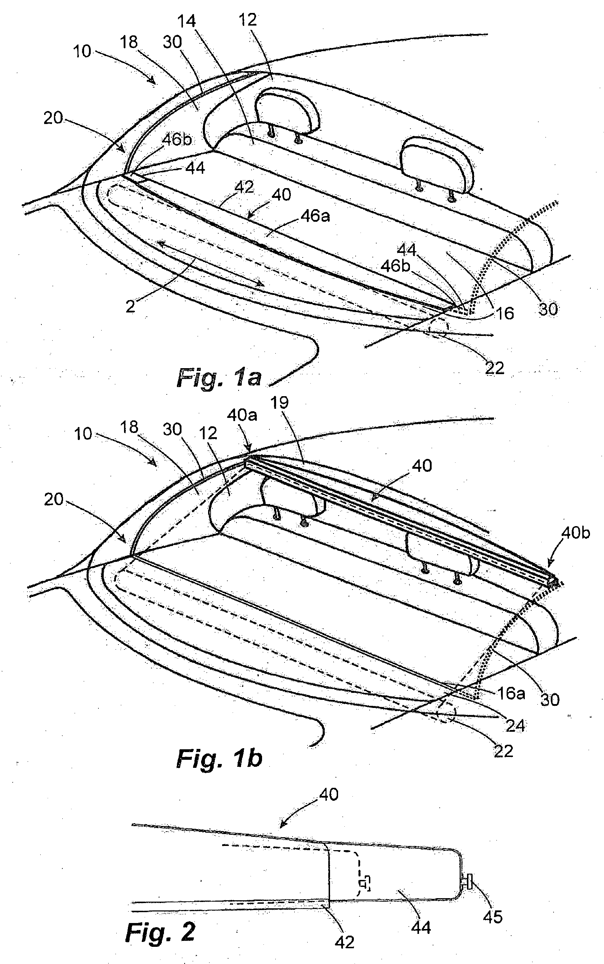

Die Fig. 1 a und 1b zeigen den Heckbereich eines Fahrzeugs 10 und gestatten einen Blick durch die Heckscheibe 12 auf den Bereich einer hinteren Fahrzeugbank 14 und einer dahinter angeordneten Hutablage 16.

Zur Beschattung des Heckfensters 12 ist ein Rollosystem 20 vorgesehen. Dieses Rollosystem 20 verfügt über eine unterhalb der Hutablage 16 angeordnete und drehbar gelagerte Wickelwelle 22, auf der im Stauzustand der Fig. 1 a ein flexibles, beispielsweise textiles, Flächengebilde 24 aufgewickelt ist. Dieses Flächengebilde 24 kann durch einen in der Hutablage vorgesehenen Durchtrittsspalt 16a hindurch von der Wickelwelle 22 abgewickelt werden, um hierdurch den Funktionszustand der Fig. 1 b zu erreichen.

Zu Zweck dieser Überführung in den Funktionszustand der Fig. 1b ist am distalen Ende des etwa trapezförmigen Flächengebildes 24 ein Auszugprofil 40 vorgesehen. Dieses Auszugprofil ist mittels in den Fig. 1a und 1 b nicht näher dargestellter Gleitabschnitte an seinen distalen Enden 40a, 40b durch Führungsschienen 30 geführt beweglich. Die Führungsschienen 30 erstrecken sich beidseitig des Flächengebildes bezogen auf dessen in Fig. 1 b verdeutlichten Funktionszustand entlang von C-Säulen 18 des Fahrzeugs 10.

Die Führungsschienen 30 weisen einen gekrümmten Verlauf auf. Im Bereich ihres unteren Endes sind sie nahezu vertikal ausgerichtet, während sie im Bereich ihres oberen Endes nahezu horizontal ausgerichtet sind. Weiterhin konvergieren die Führungsschienen 30 in leichtem Maße in Richtung ihres oberen Endes. Der Abstand der Führungsschienen 30 voneinander ist am unteren Ende daher größer als am oberen Ende.

Aufgrund der Krümmung der Führungsschienen schwenkt das Auszugprofil bei seiner Überführung aus dem Stauzustand der Fig. 1a in den Funktionszustand der Fig. 1b. Die im Stauzustand der Fig. 1a nach oben weisenden Flächen des Auszugprofils 40 weisen im Funktionszustand in Fahrzeuglängsrichtung nach vorne.

Weiterhin ist aufgrund der Nichtparallelität der Führungsschienen 30 das Auszugprofil 40 längenveränderlich ausgebildet. Es weist hierfür ein Hauptsegment 42 sowie zwei gegenüber dem Hauptsegment in Fahrzeugquerrichtung 2 verlagerbarer Endsegmente 44 auf. Im Stauzustand des Rollosystems 20, der in Fig. 1 a dargestellt ist, sind die gegenüber dem Hauptsegment 42 beweglichen Endsegmente 44, an denen die Gleitabschnitte zur Führung an der Führungsschiene 30 vorgesehen sind, ausgefahren. Somit hat das Auszugprofil in diesem Zustand seine maximale Erstreckung bezogen auf die Fahrzeugquerrichtung 2. Im Funktionszustand der Fig. 1 b, in dem das Auszugprofil 40 entlang der Führungsschienen 30 bis in seine obere Endlage verlagert ist, sind die Endsegmente 44 nahezu vollständig in das Hauptsegment 42 eingeschoben, so dass in diesem Zustand der Fig. 1 b die Mehrteiligkeit des Auszugprofils kaum noch zu erkennen ist.

Im Stauzustand der Fig. 1 a überdeckt eine Abdeckfläche 46a, 46b des Auszugprofils nahezu vollständig den Durchtrittsschlitz 16a. Diese Abdeckfläche 46a, 46b weist einen Hauptabschnitt 46a auf, der am Hauptsegment 42 vorgesehen ist. Sie weist weiterhin Seitenabschnitte 46b auf, die an den Endsegmenten 44 vorgesehen sind. Gemeinsam überdecken diese Abschnitte 46a, 46b der Abdeckfläche den Austrittsschlitz 16a in einer ästhetisch vorteilhaften Weise. Das Vorhandensein eines Rollosystems ist daher im Stauzustand der Fig. 1 a nur bei näherer Begutachtung der Hutablage 16 zu erkennen.

Im Funktionszustand der Fig. 1 b ist in der schon erläuterten Art und Weise kaum noch zu erkennen, dass das Auszugprofil 40 mehrteilig ausgebildet ist, da die Endsegmente 44 nahezu vollständig in das Hauptsegment 42 eingeschoben sind. Die Abdeckfläche 46a des Hauptsegments ist an einer Längskante gewölbt ausgebildet, so dass sie weitgehend bündig mit einem Dachhimmel des Fahrzeugs abschließt. Der verbleibende Lichtspalt 19 ist daher sehr schmal.

Fig. 2 zeigt einen Teil des Auszugprofils 40 in einer Draufsicht. Dabei ist anhand der gestrichelt dargestellten Linien zu erkennen, dass die Endsegmente 44, an denen die Gleitelement 45 vorgesehen sind, im Funktionszustand nahezu vollständig in das Hauptsegment 42 eingefahren sind. Es ragt lediglich noch ein kurzer Abschnitt des Endsegments 44 aus dem Hauptsegment 42 heraus, der eine Anbringungsbohrung 44a zur Aufnahme des lediglich in Fig. 2 dargestellten Gleitelements 45 umfasst.

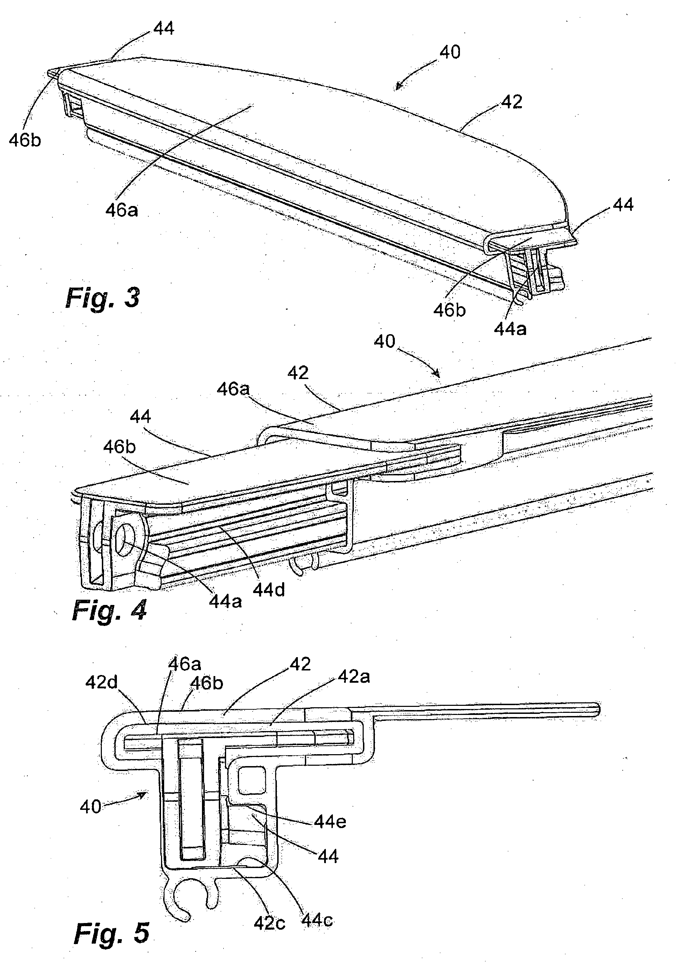

Der Aufbau des Auszugprofils 40 ist anhand der Fig. 3, 4 und 5 gut zu ersehen. Dabei zeigt Fig. 3 das Auszugprofil in seiner Gesamtheit und in einem Zustand, in dem die Endsegmente 44 nahezu vollständig in das Hauptsegment 42 eingefahren sind.

Wie sich insbesondere aus Fig. 5 ersehen lässt, ist der Aufnahmeraum 42a, in den das jeweilige Endsegment 44 zur Erreichung des Funktionszustandes der Fig. 1 b einfährt, bezogen auf den Querschnitt umlaufend durch das Hauptsegment 42 geschlossen, so dass der eingeschobene Abschnitt des Endsegments 44 unabhängig von der Betrachtungsperspektive nicht mehr zu sehen ist. Weiterhin ist erkennbar, dass die Verlagerbarkeit der Endsegmente 44 gegenüber dem Hauptsegment 42 in Fahrzeugquerrichtung 2 durch Führungsflächen 42c, 44c an den Endsegmenten 44 und im Hauptsegment 42 gewährleistet ist. Die Führungsflächen 44c der Endsegmente 44 sind dabei an einem von der Abdeckfläche 46b beabstandeten Profilabschnitt 44d der Endsegmente vorgesehen. Der Endabschnitt 46b der Abdeckfläche 46 nimmt an der Führung nicht teil. Er ist stattdessen bewusst deutlich von der Innenwandung 42d des Hauptsegments 42 beabstandet, so dass es hier nicht zum Berührkontakt kommt. Statt des Endabschnitt 46b der Abdeckfläche wird die Relativverlagerung des Endsegments 44 gegenüber dem Hauptsegment 42 nach oben durch eine Führungsfläche 44e gewährleistet.

Dadurch, dass der Endabschnitt 46b der Abdeckfläche beabstandet von Hauptsegment 42 ist, werden Schleifspuren und Klappergeräusche vermieden. Der Abstand zwischen dem Endabschnitt 46b der Abdeckfläche und der Innenfläche des Hauptsegments 42 beträgt vorliegend etwa 1 mm.

Das dargestellte Rollosystem ist in vielerlei Hinsicht unter ästhetischen Gesichtspunkten sehr vorteilhaft. Sowohl in dem in Fig. 1a dargestellten Stauzustand als auch in dem in Fig. 1 b dargestellten Funktionszustand ergeben sich aus der Mehrteiligkeit des Auszugprofils 40 nennenswerte ästhetische Vorteile. Weiterhin gewährleistet die Bauweise, dass es auch nicht zu störenden Klappergeräuschen kommt.

## Patentansprüche

1. Rollosystem (20) für ein Kraftfahrzeug (10), insbesondere zur Beschattung eines Heckfensters (12) des Kraftfahrzeugs (10), mit
- einem vorgesehenen flexiblen Flächengebilde (24), welches zwischen einem Stauzustand und einem Funktionszustand in einer Auszugrichtung beweglich ist,
- einem an einem distalen Ende des Flächengebildes vorgesehenen Auszugprofil (40) und
- zwei Führungsschienen (30), die beidseitig des Flächengebildes (24) in dessen Funktionszustand angeordnet sind und die sich zumindest abschnittsweise nichtparallel erstrecken,
wobei
- das Auszugprofil (40) zwei einander gegenüberliegende endseitige Gleitabschnitte (45) aufweist, die sich jeweils im Eingriff mit einer Führungsschiene (30) befinden,
- das Auszugprofil (40) eine im Stauzustand in Auszugrichtung weisende Abdeckfläche (46a, 46b) aufweist, die der Abdeckung eines Austrittsschlitzes (16a) für das Flächengebilde (24) dient und
- das Auszugprofil (40) längenveränderlich ausgebildet ist und hierzu ein mit dem distalen Endes des Flächengebildes (24) verbundenes Hauptsegment (42) und zwei gegenüber dem Hauptsegment orthogonal zur Auszugrichtung mittels einer Führung geführt bewegliche Endsegmente (44) aufweist, wobei die Abdeckfläche (46a, 46b) einen Hauptabschnitt (46a) am Hauptsegment (42) und Seitenabschnitte (46b) an den Endsegmenten (44) umfasst,
wobei
die Seitenabschnitte (46b) der Abdeckfläche (46a, 46b) bei einer Längenverringerung des Auszugprofils (40) in einen vom Hauptsegment (42) umgebenen Aufnahmeraum (42a) einfahren, **dadurch gekennzeichnet, dass**
die Führungen (44c, 44e, 42c), mittels derer die Endsegmente gegenüber dem Hauptsegment geführt sind, derart getrennt von den Seitenabschnitten (46b) ausgebildet sind, dass die Seitenabschnitte (46b) der Abdeckfläche (46a, 46b) beim Einfahren in den Aufnahmeraum (42a) nicht in Berührkontakt mit dem Hauptsegment (42) gelangen.

2. Rollosystem (20) nach Anspruch 1,
**dadurch gekennzeichnet, dass**
der Querschnitt des Hauptsegments (42) im Bereich des Aufnahmeraums (42a) umfänglich den Aufnahmeraum (42a) umgibt.

3. Rollosystem (20) nach Anspruch 2,
**dadurch gekennzeichnet, dass**
die Führungen (44c, 44e, 42c) am Seitenabschnitt eine in gleiche Richtung wie die Seitenabschnitte (46b) der Abdeckfläche (46a, 46b) weisende Führungsfläche (44e) aufweist, die die Beweglichkeit der Seiteabschnitte derart beschränkt, dass Berührkontakt mit dem Hauptsegment (42) verhindert wird.

4. Rollosystem (20) nach einem der Ansprüche 1 bis 3,
**dadurch gekennzeichnet, dass**
das Hauptsegment (42) eine sich von der Mitte zu den Seiten hin verjüngende Formgebung aufweist.

5. Rollosystem (20) nach einem der vorstehenden Ansprüche,
**gekennzeichnet durch**
eine Abdeckplatte (16) mit einem Austrittsschlitz (16a), **durch** den hindurch das Flächengebilde (24) bei der Überführung aus dem Stauzustand in den Funktionszustand hindurchgezogen wird, wobei der Austrittsschlitz (16a) eine Länge aufweist, die die Länge des Hauptsegments (42) übersteigt und wobei vorzugsweise das Auszugprofil (40) bei ausgezogenen Endsegmenten (44) mit seiner Abdeckfläche (46a, 46b) den Austrittsschlitz (16a) vollständig oder nahezu vollständig überdecken kann.

6. Rollosystem (20) nach einem der vorstehenden Ansprüchen,
**dadurch gekennzeichnet, dass**
das Rollosystem (20) eine vorzugsweise unterhalb der Abdeckplatte angeordnete Wickelwelle (22) aufweist, auf der das Flächengebilde (24) im Stauzustand zumindest zum überwiegenden Teil aufgewickelt ist.

7. Rollosystem (20) nach einem der vorstehenden Ansprüche,
**dadurch gekennzeichnet, dass**
das Auszugprofil (40) und der Austrittsschlitz (16a) derart aufeinander abgestimmt sind, dass das Auszugprofil (40) nicht durch den Austrittsschlitz (16a) hindurchtreten kann.

8. Fahrzeug (10) mit einem Rollosystem (20), insbesondere einem Beschattungs-Rollosystem (20) zur Beschattung eines Heckfensters (12) des Kraftfahrzeugs (20),
**dadurch gekennzeichnet, dass**
das Rollosystem (20) nach einem der vorstehenden Ansprüche ausgebildet ist.

## Claims

1. Roller blind system (20) for a motor vehicle (10), in particular for shading a rear window (12) of the motor vehicle (10), with
- a flexible fabric sheet (24) provided that can be moved between a stowed condition and a functioning condition in a pull-out direction,
- a pull-out profile (40) provided at a distal end of the fabric sheet, and
- two guide rails (30) that are located at both sides of the fabric sheet (24) when it is in its functioning condition, and which run, at least in part, not parallel to one another,
wherein
- the pull-out profile (40) incorporates at its ends two sliding sections (45) opposite one another, each of which is in engagement with a guide rail (30),
- the pull-out profile (40) incorporates a covering face (46a, 46b) that is directed in the pull-out direction when in the stowed condition and which serves to cover an outlet slot (16a) for the fabric sheet (24), and
- the pull-out profile (40) is constructed so as to be variable in length, for which purpose it comprises a main segment (42) connected to the distal end of the fabric sheet (24) and two end segments (44) that are able to move with respect to the main segment in a direction orthogonal to the pull-out direction by means of a guide, wherein the covering face (46a, 46b) comprises a main section (46a) on the main segment (42) and side sections (46b) on the end segments (44),
wherein
the side sections (46b) of the covering face (46a, 46b) enter into a receiving pocket (42a) enclosed by the main segment (42) when the length of the pull-out profile (40) is reduced,
**characterized in that**
the guides (44c, 44e, 42c) by means of which the end segments are guided with respect to the main segment are configured separate from the side sections (46b) in such a way that the side sections (46b) of the covering face (46a, 46b) do not come into physical contact with the main segment (42) during inserting into the receiving pocket (42a).

2. Roller blind system (20) according to Claim 1,
**characterized in that**
in the region of the receiving pocket (42a) the cross-section of the main segment (42) surrounds the receiving pocket (42a) circumferentially.

3. Roller blind system (20) according to Claim 2,
**characterized in that**
the guides (44c, 44e, 42c) at the side section incorporate a guide surface (44e) that faces in the same direction as the side sections (46b) of the covering face (46a, 46b) and that restricts the freedom of movement of the side sections in such a way that physical contact with the main segment (42) is prevented.

4. Roller blind system (20) according to one of Claims 1 to 3,
**characterized in that**
the main segment (42) has a shape design that tapers from the centre towards the sides.

5. Roller blind system (20) according to one of the preceding claims,
**characterised by**
a covering panel (16) having an outlet slot (16a) through which the fabric sheet (24) is pulled as it is transferred from the stowed condition into the functioning condition, wherein the outlet slot (16a) has a length that is greater than the length of the main segment (42), and wherein preferably the pull-out profile (40) can entirely or almost entirely cover the outlet slot (16a) with its covering face (46a, 46b) when the end segments (44) are extended.

6. Roller blind system (20) according to one of the preceding claims,
**characterized in that**
the roller blind system (20) incorporates a winding shaft (22), preferably located underneath the covering panel, onto which shaft the fabric sheet (24) is wound at least to a large extent when in the stowed condition.

7. Roller blind system (20) according to one of the preceding claims,
**characterized in that**
the pull-out profile (40) and the outlet slot (16a) are matched to one another in such a way that the pull-out profile (40) cannot pass through the outlet slot (16a).

8. Vehicle (10) with a roller blind system (20), in particular a shading roller blind system (20) for providing shade at a rear window (12) of the motor vehicle (20),
**characterized in that**
the roller blind system (20) is constructed according to one of the preceding claims.

## Revendications

1. Système de store (20) pour un véhicule à moteur (10), en particulier pour ombrager une lunette arrière (12) du véhicule à moteur (10), avec
- un article plat flexible prévu (24), qui est mobile entre un état de rangement et un état fonctionnel dans une direction d'extraction,
- un profilé d'extraction (40) prévu à une extrémité distale de l'article plat, et
- deux rails de guidage (30), qui sont disposés de part et d'autre de l'article plat (24) dans son état fonctionnel et qui s'étendent au moins localement de façon non parallèle,
dans lequel
- le profilé d'extraction (40) présente deux patins d'extrémité opposés l'un à l'autre (45), qui se trouvent respectivement en prise avec un rail de guidage (30),
- le profilé d'extraction (40) présente à l'état de rangement une face de recouvrement (46a, 46b) orientée dans la direction d'extraction, qui sert à recouvrir une fente de sortie (16a) pour l'article plat (24) et
- le profilé d'extraction (40) est réalisé à longueur variable et présente à cet effet un segment principal (42) relié à l'extrémité distale de l'article plat (24) et deux segments d'extrémité (44) mobiles par rapport au segment principal guidés orthogonalement à la direction d'extraction au moyen d'un guide, dans lequel la face de recouvrement (46a, 46b) comprend une partie principale (46a) sur le segment principal (42) et des parties latérales (46b) sur les segments d'extrémité (44),
dans lequel les parties latérales (46b) de la face de recouvrement (46a, 46b) rentrent dans un espace de réception (42a) entouré par le segment principal (42) lors d'une diminution de longueur du profilé d'extraction (40),
**caractérisé en ce que** les guides (44c, 44e, 42c), au moyen desquels les segments d'extrémité sont guidés par rapport au segment principal, sont formés séparément des parties latérales (46b), de telle manière que les parties latérales (46b) de la face de recouvrement (46a, 46b) ne viennent pas en contact matériel avec le segment principal (42) lors de la rentrée dans l'espace de réception (42a).

2. Système de store (20) selon la revendication 1, **caractérisé en ce que** la section transversale du segment principal (42) dans la région de l'espace de réception (42a) entoure en périphérie l'espace de réception (42a).

3. Système de store (20) selon la revendication 2, **caractérisé en ce que** les guides (44c, 44e, 42c) présentent à la partie latérale une face de guidage (44e) orientée dans la même direction que les parties latérales (46b) de la face de recouvrement (46a, 46b), qui limite la mobilité des parties latérales, de telle manière qu'un contact matériel avec le segment principal (42) soit empêché.

4. Système de store (20) selon l'une quelconque des revendications 1 à 3, **caractérisé en ce que** le segment principal (42) présente une configuration se rétrécissant à partir du milieu en direction des côtés.

5. Système de store (20) selon l'une quelconque des revendications précédentes, **caractérisé par** une plaque de recouvrement (16) avec une fente de sortie (16a), à travers laquelle l'article plat (24) est tiré lors du passage de l'état de rangement à l'état fonctionnel, dans lequel la fente de sortie (16a) présente une longueur qui dépasse la longueur du segment principal (42), et dans lequel le profilé d'extraction (40) peut de préférence, lorsque les segments d'extrémité (44) sont extraits, recouvrir complètement ou presque complètement la fente de sortie (16a) avec sa face de recouvrement (46a, 46b).

6. Système de store (20) selon l'une quelconque des revendications précédentes, **caractérisé en ce que** le système de store (20) présente un arbre d'enroulement (22) disposé de préférence en dessous de la plaque de recouvrement, sur lequel l'article plat (24) est au moins en majeure partie enroulé à l'état de rangement.

7. Système de store (20) selon l'une quelconque des revendications précédentes, **caractérisé en ce que** le profilé d'extraction (40) et la fente de sortie (16a) sont agencés l'un par rapport à l'autre, de telle manière que le profilé d'extraction (40) ne puisse pas passer à travers la fente de sortie (16a).

8. Véhicule (10) avec un système de store (20), en particulier un système de store d'ombrage (20) pour ombrager une lunette arrière (12) du véhicule à moteur (20), **caractérisé en ce que** le système de store (20) est réalisé selon l'une quelconque des revendications précédentes.
